# EUROPEAN PATENT SPECIFICATION

(11) **EP 2 609 133 B1**
(45) Date of publication and mention of the grant of the patent: **28.10.2015**
(21) Application number: 11763779.3
(22) Date of filing: 26.08.2011
(51) Int. Cl.: C08G 63/64, C08G 63/08, C08K 5/101, C08L 69/00

(54) **COPOLYMERS BASED ON POLYESTER AND AROMATIC POLYCARBONATE**
AUF POLYESTER UND AROMATISCHEM POLYCARBONAT BASIERENDE COPOLYMERE
COPOLYMÈRES À BASE DE POLYESTER ET DE POLYCARBONATE AROMATIQUE

(30) Priority: 26.08.2010 IT RM20100457
(43) Date of publication of application: 03.07.2013
(73) Proprietor: UNIVERSITA' DI PISA, 56126 Pisa (IT)
(72) Inventor: PENCO, Maurizio, I-25123 Brescia (IT); LAZZERI, Andrea, I-56126 Pisa (IT); PHUONG, Thanh Vu, I-56126 Pisa (IT); CINELLI, Patrizia, 50144 Firenze (IT)
(74) Representative: Germinario, Claudio
(86) International application number: PCT/IB2011/053753
(87) International publication number: WO 2012/025907

(56) References cited:
- US-A- 5 847 011
- US-A1- 2005 001 349
- US-A1- 2008 300 379
- DATABASE CA [Online] CHEMICAL ABSTRACTS SERVICE, COLUMBUS, OHIO, US; WANG, YAN-YAN ET AL: "Transesterification and miscibility of polycarbonate/polylactic acid blends", XP002622869, retrieved from STN Database accession no. 2010:294456 -& GAOFENZI CAILIAO KEXUE YU GONGCHENG , 25(11), 45-48 CODEN: GCKGEI; ISSN: 1000-7555, 2009, XP002622870,
- DATABASE CA [Online] CHEMICAL ABSTRACTS SERVICE, COLUMBUS, OHIO, US; CHIELLINI, EMO ET AL: "Segmented polyesters for biomedical application: synthesis and utilization in semipermeable membrane manufacture", XP002622871, retrieved from STN Database accession no. 1983:618533 & PROC. IUPAC, I. U. P. A. C., MACROMOL. SYMP., 28TH , 365 PUBLISHER: INT. UNION PURE APPL. CHEM., OXFORD, UK. CODEN: 50DXAF, 1982,

## Description

The present invention relates to new processes for preparation of copolymers made from aromatic polycarbonate and biodegradable polylactic acid (PLA).

### STATE OF THE ART

The development of new materials derived from renewable sources is a goal of high technological and environmental importance. In this context, polymers derived from agricultural sources, such as polylactic acid (PLA) and its copolymers, are of great importance today. Currently, one of the processes used in the production of PLA is that starting from corn starch. Even if the product is of great interest, and has certain advantages compared to traditional plastics, the nature of polyester, its high hydrolytic susceptibility and low crystallization rate, can be very important limits. Values of glass transition temperature (Tg) around 60 °C, do not allow the maintenance of the mechanical properties in the temperature range around the glass transition. In addition, the possibility of occurrence of further crystallization at temperature values above the Tg, may result in dimensional instability of the manufactured items under the operating conditions. These features preclude the use of these materials in areas such as automotive, electrical and electronic equipment, durable consumer goods such as mobile phones.

In principle, PLA-based materials, characterized by a good maintenance of mechanical properties to temperatures above Tg, but obviously lower than the melting temperature, can be obtained from: a) by a crystallization process, either by reheating after moulding or through the use of nucleating and accelerating agents, b) by physical mixing with a second polymer component, immiscible with the PLA, which is characterized by a glass phase having a high Tg.

For a crystallization method, there are known a method of reheating (annealing) after molding to improve a degree of crystallization and a method of molding while a crystallization nucleating agent is added. A method of annealing after molding does not only have problems of a complicated molding process and a long time period of moulding but also is required to provide a die for annealing or the like in order to avoid deformation involved with crystallization, and thus there are problems in the cost and productivity.

For a method of adding a crystallization nucleating agent, development of a crystallization nucleating agent to improve a degree of crystallization and a rate of crystallization is advanced, but, even if a crystallization nucleating agent is added, a time period of crystallization of about 2 minutes is required at present, at the current status of the art, and accordingly, it is not possible to conduct molding in a time period of a molding cycle similar to that of a petroleum-derived and general-purpose resin. Furthermore, it is necessary to conduct crystallization at a temperature around 100 to 110 °C, whereby it is not possible to conduct moulding by using an inexpensive water cooling-type die temperature control machine and there is a problem of increasing the environmental load due to a required high temperature. Moreover, when only polylactic acid is crystallized, a maximum heat deflection temperature of around 55 °C (at a load of 1.80 MPa) can be obtained even if sufficient crystallization is conducted by annealing or the like, whereby there is a problem of an insufficient heat resistance.

Blending with polymers, like aromatic polycarbonates, that possess a high heat resistance is another route to improve the properties of PLA-based materials. However, most of the blends between different polymers are immiscible, and adhesion between the two polymers is weak due to high interfacial tension and weak entanglements. This happens when the polymers involved are incompatible. Obviously, the polymer system must show a good adhesion between the phases to achieve good mechanical properties of polymer blends, above all tensile strength.

In particular, the patent literature contains several patents that describe alloys based on PLA and aromatic polycarbonate (PC). In these polymeric compounds compatibilization agents of polymeric nature have also been used, in order to improve the adhesion properties of the interface between the various phases. In these systems, however, remains the problem of limited compatibility between the phases due to the substantial difference in the chemical structure of the two components (PLA and PC).

Therefore, there is a great need of new biodegradable copolymers based on polylactic acid and aromatic polycarbonates that maintain optimum mechanical properties, in particular tensile strength, at temperatures higher than glass transition of the PLA phase and preferably suitable for the production of materials for different industrial sectors such as transport, electronic and electrical equipment.

### SUMMARY OF THE INVENTION

The inventors, through an process of reactive mixing, have surprisingly obtained new copolymers characterized by a block structure containing polylactic acid (PLA) covalently linked to segments of aromatic polycarbonate (PC) that maintain optimal mechanical properties at temperatures above 60 °C and below 110 °C with a consequent and significant improvement in dimensional stability in the mentioned temperature range. These features are derived from two contributing factors in these new materials: the presence of a second glassy phase characterized by a high Tg (about 110-150 °C) and high adhesion between the two phases, formed respectively by PLA and PC, which are covalently linked as demonstrated by exclusion chromatography experiments (SEC). An advantageous feature of these new materials is the improved resistance to deformation caused by temperature compared to a PLA homopolymer of similar molecular weight. In addition, the compostability and biodegradability of these materials, contribute to troubleshooting the accumulation of conventional polymeric materials, resulting from exhausted products originated by the above mentioned sectors. On the other hand, recycled PC (Polycarbonate) is a high-quality material that is often incinerated after use. This process causes environmental damages by emitting dioxin and carbon dioxide into the air, and the ashes cannot be recycled. The use of PLA/PC bioplastic hybrid with recycled polycarbonate resin would reduce the amount of energy and ingredients in new production, and avoid environmental damage caused by waste material disposal. The new copolymers were prepared by a process of reactive blending in the molten state, starting from mixtures of polylactic acid (PLA) and an aromatic polycarbonate (PC). The mixing conditions such as temperature and duration of mixing are selected to obtain interchange reactions between the base polymers. The procedure leads to the obtainment of new materials with the structure of block copolymers, whose structure and molecular masses are advantageously adjustable by controlling the parameters of the process mixing.

The subject of the present invention are the processes for the preparation of copolymers as substantially described in claim 1. Preferred features of the invention are the subject of the dependent claims set forth herein.

The advantages, characteristics and conditions of employment of the present invention will be evident from the following detailed description of some methods of production, presented for illustrative and not limiting purposes.

### DETAILED DESCRIPTION OF THE FIGURES

Figure 1. Molecular characterization performed by molecular (size) exclusion chromatography (SEC). The graph shows that the distribution curves of the molecular masses of the copolymers are overlaps of the individual components. The formation of copolymers of the present invention is well marked by the SEC graphs, in which the distributions of molecular masses are single mode.

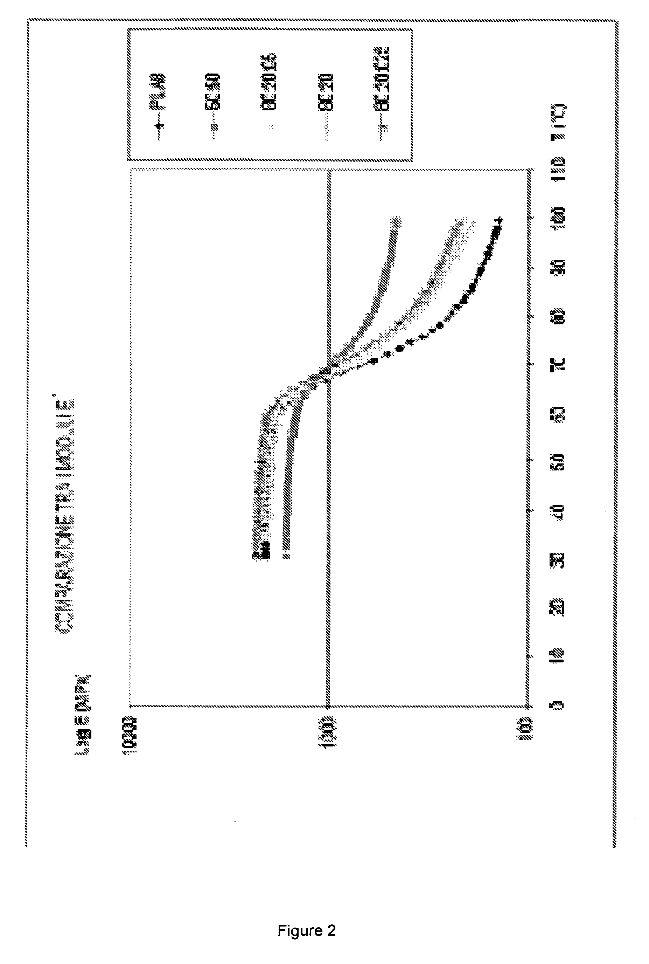

Figure 2. In this graph we observe in particular a rise in the lower molecular weight fraction in copolymers than in the starting polycarbonate. This fact is obviously related to the inclusion of the PC blocks in the block structure, leading to an increase in low molecular weight fractions (in this case those present in the PC). Obviously, the single-mode curve confirms the presence of a single material with copolymer structure. Since the transesterification reaction, responsible for product formation, there is also a concurrent hydrolytic reaction, the average molecular weights of the copolymers are intermediate between the values of those of starting polymers used.
From the morphological point of view, all the copolymers prepared have a two-phase structure, typical structure of block copolymers.
Figure 3. Effect of the presence of PC phase on the elastic module, measured as a function of temperature and evaluated at 60 °C for blends obtained by batch mixing.
Figure 4. Analysis by scanning and transmission electron microscopy (SEM and TEM) of a form of implementation of the copolymer according to the present invention containing a weight ratio of PLA/PC equal to 80/20.

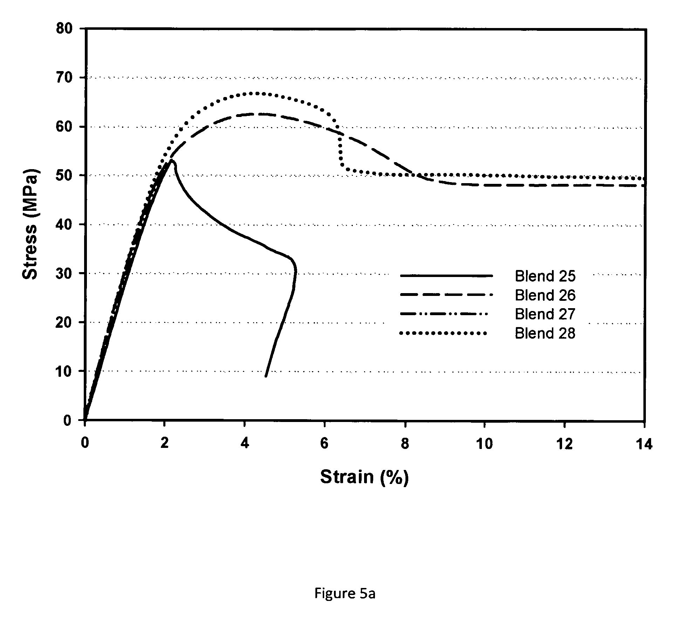

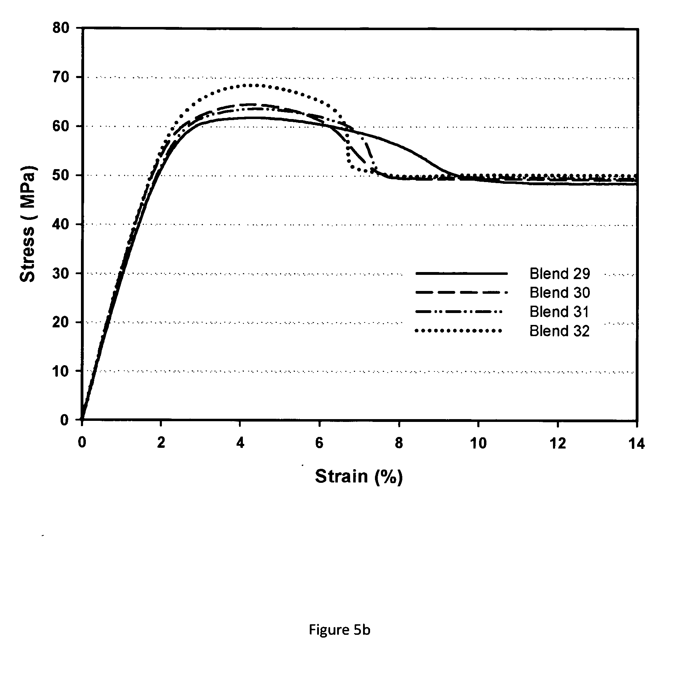

Figure 5. Stress-strain curves for blends obtained by twin screw extrusion and injection moulding. Figure 5a shows the plots for Blends 25-28, extruded at 210 C, while Figure 5b the σ-ε traces for Blends 29-32, extruded at 230 C.
Figure 6. DMTA plots of storage modulus and tan *δ* versus temperature for Blends 25-28 obtained by twin screw extrusion and injection moulding after annealing at 80 °C for 48 h under vacuum.
Figure 7. DMTA plots of storage modulus and tan *δ* versus temperature for Blends 29-32 obtained by twin screw extrusion and injection moulding after annealing at 80 °C for 48 h under vacuum.
Figure 8. Comparison of the DMTA plots of pure PLA, Blend 25 and Blend 28 obtained by twin screw extrusion and injection moulding without annealing.
Figure 9 - Evolution of biodegradation of PLA80/PC20 (Blend 33) and PLA80/PC20 reinforced with additional 20% fibre (Blend 34), in comparison with pure cellulose and lignocellulose fibres.

### DETAILED DESCRIPTION OF THE INVENTION

The copolymers are obtained by the following reaction:

(PLA)*n* + (PC)*m* → [(PLA)x - (PC)y]z

In which 100 < *n* < 5000, 20 < m < 300, *x* < *n, y* < *m* and Z is greater than or equal to 1 in the presence of a catalytic system comprising tetrabutylammonium tetraphenylborate (TBATPB) and glycerin triacetate, also known as triacetin (TA).

In one embodiment these copolymers are obtained by copolymerization of polylactic acid of length *n* and of aromatic polycarbonate of length *m* in the following percentages by weight of the total weight of the copolymer:
- Polylactic acid component between 5% and 95%, more preferably between 10%-80% weight parts;
- aromatic polycarbonate component between 5% and 95%, more preferably between 20%-90% weight parts;

The copolymers consist of at least one unit formed from a block A of polylactic acid (PLA) covalently linked to a block B of aromatic polycarbonate (PC) and are obtainable by copolymerization of polylactic acid with length *n* and of aromatic polycarbonate of length *m.*

The preferred aromatic polycarbonate component is bisphenol-A polycarbonate, but also the following compounds may be used. The weight-average molecular weight of the aromatic polycarbonate (measured by gel permeation chromatography) can be selected from, but not limited to, 10,000-200,000, preferably 15,000-80,000, most preferably 24,000-32,000.

The aromatic polycarbonate can be prepared, for example, by a method disclosed in DE-A 149S626, DE-A 2232877, DE-A 2703376, DE-A 2714S44, DE-A 3000610 and DE-A 3832396. Recycled aromatic polycarbonate can also be used.

The amount of the aromatic polycarbonates to be employed is between 5 and 95 wt%, preferably between 20 and 80 wt% of the mixture.

The component polylactic acid can be selected from, but is not limited to, poly L-lactic acid, poly D-lactic acid or the mixture thereof.

The weight average molecular weight of the polylactic acid (measured by gel permeation chromatography) can be selected from, but is not limited to, 15,000-1,000,000, preferably 40,000 to 100,000, more preferably 80,000-100,000.

There is no special limitation with regard to the purity of the polylactic acid, preferably the polylactic acid comprising 80 wt. % or more poly L-lactic acid and/or poly D-lactic acid, more preferably the polylactic acid comprising 90 wt. % or more poly L-lactic acid and/or poly D-lactic acid. Recycled polylactic acid can also be used.

The catalytic system comprises tetrabutylammonium tetraphenylborate (TBATPB) and glycerin triacetate, also known as triacetin (TA). Preferably the tetrabutylammonium tetraphenylborate (TBATPB) will be used in a concentration of between 0.10 and 0.5% by weight respect to the total weight of the polymer mixture, while triacetin will be used in the range 0.3 to 20% by weight. Also mixtures of the two catalysts within the same respective percentage intervals may be used.

The copolymers can further comprise a flame retardant and, or a fluorine-based resin and, or one or more additives selected from the class formed by lubricants, mold-release agents, nucleating agents, stabilizers, fillers, reinforcing agents, antistatic agents, dyestuffs and pigments. The respective amounts are 1-25 weight parts of a flame retardant, based on 100 weight parts and 0.3-2 weight parts of a fluorine-based resin, preferably 0.5-2 weight parts, both based on 100 weight parts of aromatic polycarbonate and polylactic acid components. Advantageously, the quantity of the flame retardant to be employed is 2-20 weight parts, more preferably 3-15 weight parts, and most preferably 5-15 weight parts, based on 100 weight parts of the copolymers according to the invention.

### Method for preparation and uses

The process for preparing copolymers according to the invention comprises mixing in the molten state a component of polylactic acid of length *n* and a component of aromatic polycarbonate of length *m,* wherein *n* is comprised between 100 and 5000 and *m* is comprised between 20 and 300, for a time range between 0.5 and 20 minutes at a temperature of at least 180° C in the presence of a catalytic system comprising tetrabutylammonium tetraphenylborate (TBATPB) and glycerin triacetate (TA). Tetrabutylammonium tetraphenylborate (TBATPB) may be present in a concentration of between 0.15 to 0.5% by weight and triacetin in a concentration of between 0.3 to 20% by weight the percentage of each catalyst being referred to the total weight of the copolymers. A preferred aromatic polycarbonate component is bisphenol A polycarbonate. The step of mixing advantageously occurs in a twin screw extruder at a temperature between 200 and 230 °C. During said step of mixing a flame retardant and, or a fluorine-based resin and, or one or more additives selected from the class formed by lubricants, mold-release agents, nucleating agents, stabilizers, fillers, reinforcing agents, antistatic agents, dyestuffs and pigments may be added.

The copolymers obtained by the mixing procedure as previously described can be profitably transformed into slabs for further processing or directly into specimens by injection moulding.

The production of such plates can be done by subjecting the mixture of copolymers to a drying step, preferably at a temperature of 80 °C under vacuum for a period of 24 hours and then moulding the dried material by compression or injection moulding. Preferably compression moulding is carried out at a temperature between 180-230 °C and a pressure between 15 - 40 bar, preferably at a temperature of 200 °C and 30 bar for the cycle time of 8 minutes. Preferably injection moulding is carried out with the chamber temperature at 210 °C, the mould temperature at 50 °C, injection time of 20 s, injection pressure in the range 1-200 bar.

The copolymers are used alone or in combination with other compounds for the preparation of products such as shell bodies of cordless phones and cell phones, computers and other shell bodies for consumer electronic equipment such as satellite navigation and echo sounders, electro-photographic instruments such as a copying machines or a laser printers or an image output instruments using an ink-jet technique or components of an electric or electronic instrument such as a home electric appliance or automotive interior parts such as car seats or their components, or commodities which may include, but not are limited to, a food container, liquid container, toy, office appliances, sports goods and/or a compact disc etc.. For the production of these objects, the technician expert in the field can use methods known in the industry.

Experiments and examples listed below are intended to better illustrate what reported in this description, these examples are not in any way to be considered as a limitation of the foregoing description and the following claims.

### EXAMPLES

### Example 1. Method of preparation of copolymers by means of a batch mixer.

In a batch mixer having a mixing chamber of 50 cc, were fed 50 g of a mixture composed as follows: 80% by weight of a PLA with a MW = 200 kDa, 20% by weight of aromatic PC having a Mw = 20 kDa, and 0.5% by weight on total polymer, of tetrabutylammonium tetraphenylborate (TBATPB, transesterification or interchange catalyst). The mixing was conducted at a temperature of 250 °C with a rotor speed of 80 rpm, for a residence time of 10 minutes. The starting polymers were first dried at a temperature of 60 °C at a pressure of 1 mm Hg for 4 days.

The material has then been compression moulded (T = 200 °C). The specimens for tensile and dynamic-mechanical testing have been obtained from milling the plates obtained. The product was characterized by SEC analysis, differential scanning thermal analysis (DSC), dynamical-mechanical thermal analysis (DMTA) morphological analysis by SEM microscopy.

### Examples 2-24.

The same procedure (batch mixing) described in Example 1 was used for the preparation of the copolymers reported in Tables 1-4.

### Example 25. Method of preparation of copolymers by twin screw extrusion.

In a twin screw co-rotating extruder having a mixing chamber of 5 cc, were fed 5 g of a mixture composed as follows: 40% by weight of a PLA with a MW = 200 kDa, 60% by weight of PC having a Mw = 20 kDa, and 0.2% by weight on total polymer of tetrabutylammonium tetraphenylborate, TBA-TPB, and/or 5% by weight on total polymer of triacetin (TA). The mixing was conducted at a temperature of 210 °C and 230 °C with a screw speed of 100 rpm, for a recycling time of 1 minute. The starting polymers were first dried at a temperature of 60 °C at a pressure of 1 mm Hg for 4 days. The material has then been injection moulded into ASTM D638V tensile bars. The chamber temperature was 210 °C, the mould temperature 50 ° C, injection time 20 s, injection pressure 790 mm Hg. After moulding samples have been annealed at 80 °C for 48 h at a pressure of 1 mm Hg. The specimens for dynamic-mechanical analysis have been obtained from the tensile bars. The product was tested by dynamical-mechanical thermal analysis (DMTA) and tensile testing.

### Examples 25-32.

The same procedure described in Example 21 was used for the preparation of copolymers 25-32. The relative composition is reported in Table 5 where the compositions are referred to as blends 25 - 32.

### Examples 33-34.

In order to perform composting tests according to ISO 14855, a scale-up to a pilot scale extruder was necessary. Two extra blends, Blend 33 and Blend 34 (see Table 7) were prepared by using a 25 mm diameter twin-screw extruder, under the condition of a cylinder temperature 230 °C, and a rotation speed of 400 rpm. The components were melt blended and taken up from a die as a melted strand, cooled by water and later by cooling air, and then a pelletized resin composition was obtained from a standard cutter, before starting the controlled composting tests.

### Experimental analysis of the copolymers obtained by batch mixing.

The molecular mass data were obtained by molecular exclusion chromatographic method, using two columns in series with a range of separation from 2000 to 400000 Dalton. As the mobile phase tetrahydrofuran was used and a viscosimetric detection system and a multi-angle light scattering, in sequence, as detectors. The micrographs were obtained by transmission electron microscopy (TEM), after staining with osmium tetroxide. The dynamic-mechanical analysis data, performed on rectangular samples having a dimension of 20 x 3 x 1 mm, were analyzed in the temperature range of 35 - 130 ° C with a heating rate of 2 °C/min, at the frequencies of 2, 5, 10 Hz. Tensile tests were performed at room temperature and 60 °C according to ASTM D63896.

From the point of view of the distribution of molecular masses, the traces obtained by molecular exclusion chromatography (SEC), performed online using various types of detectors (IR, UV, viscosimetric, multi-angle light scattering), show a single curve, compared to the case of a simple physical mixture of two homopolymers.

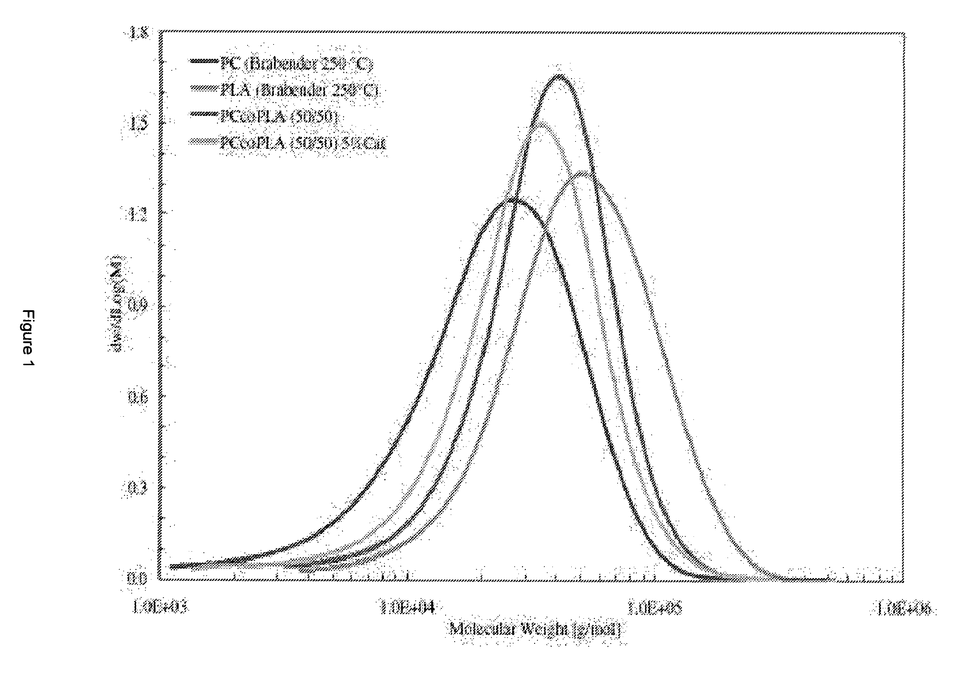

A significant increase has also been found in the molecular mass of the low molecular mass fractions present in the homopolymer of lower molecular mass. These two aspects shown from the SEC traces are the indisputable proof of the obtainment of the products covered by this invention. Moreover, selective extraction tests using different organic solvents, and subsequent SEC analysis, confirm the formation of the copolymer. By way of explanation, some SEC tracks are shown in Figure 1.

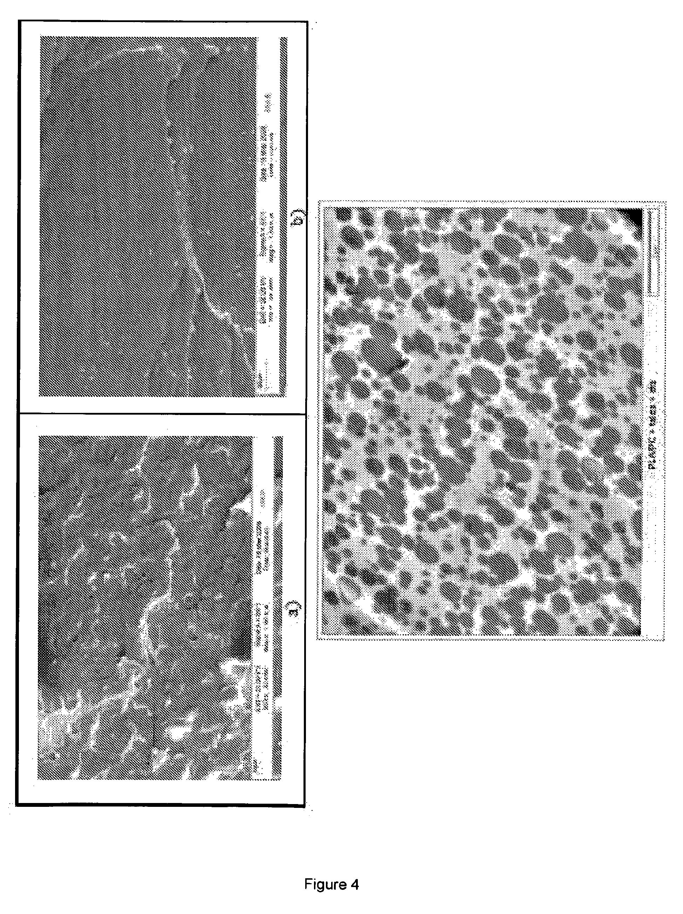

From the morphological point of view, these materials show a polyphase structure consisting of PC domains dispersed in a matrix of PLA, or vice versa, depending on the volume ratio of the components. In addition, the PLA-rich phase, an amorphous phase and a crystalline phase are present. The phase transition temperature of PLA is not, in general, much different from the typical values of the PLA, while the Tg of Polycarbonate is falling at the same temperature range of melting PLA, and thus not readily detectable either by differential calorimetry or dynamic mechanical analysis. However, the dynamic-mechanical traces show variations in the conservative module, straddling the Tg of the PLA phase, significantly lower than for pure PLA, and this undoubtedly linked to the presence of high-Tg PC-rich glassy phase. In fact, with crystallinity being generally less than that of a PLA, such behaviour cannot be attributed to the PLA-rich phase. Composition data for materials characterized by different weight ratios PLA/PC are shown in Table 1 with their respective molecular weights reported in Table 2. Figure 2 shows some DMTA traces for these materials and are compared with that of the pure PLA. A typical morphology shown by these materials is illustrated in Figures 4a) and 4b) where are reported two scanning electron micrographs (SEM) performed on a copolymer containing a PLA/PC weight ratio equal to 80/20. Figure 4c) shows a TEM micrograph of the same blend.

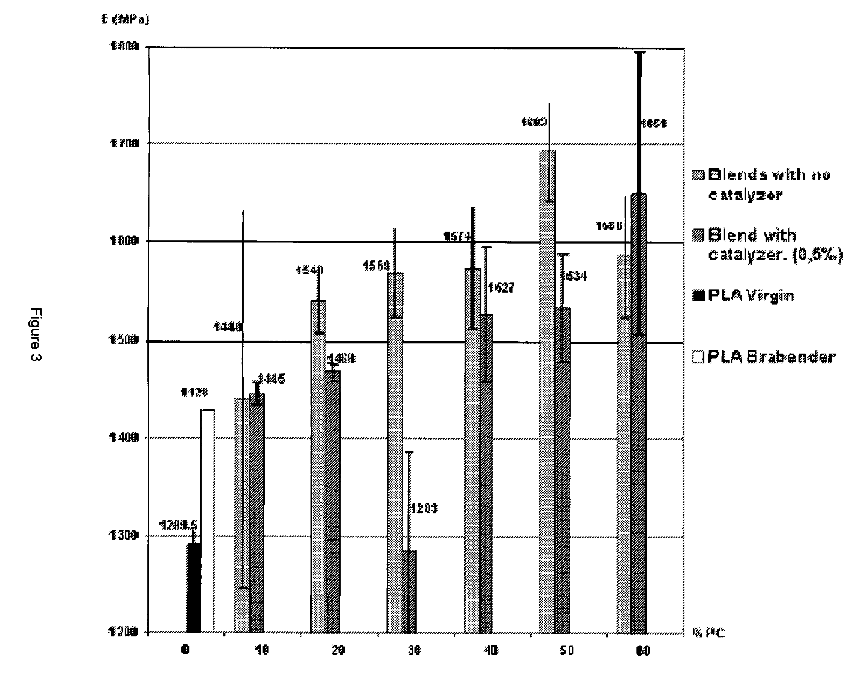

In Table 3 and 4 are also reported some data of glass transition temperatures and mechanical properties of certain materials. In particular, Figure 3 shows the values of Young's modulus at 60 °C, these values show that copolymers possess higher stiffness compared to pure PLA, at temperatures close to its Tg.

All materials prepared in the absence of catalyst and temperatures below 250 ° C show bimodal GPC curves (physical blend). For these products, molecular mass data in Table 2 are derived considering the two curves as overlapping one to each other, since it is impossible to completely separate the two components.

The better mechanical characteristics of the claimed products are referred to the maintaining of a high elastic modulus, at temperatures close to or above the Tg of the PLA with similar molecular weight. This result is closely related to presence of PC blocks with a high Tg (close to 150 °C). This can be achieved using PC starting with a degree of polymerization medium numeral greater than 30. This value is close to the asymptotic value of the Tg for an aromatic polycarbonate, 160 °C. The starting PLA must have Mn values not below 50000 Dalton.

The mixing conditions affect the structure of the copolymer in terms of number and length of blocks, and the total molecular weight of the copolymer. Specifically, the mixing time and temperature used should not lead to copolymers having average numeral molecular weights less than 20000 Dalton, to avoid a collapse of the mechanical properties.

Experimental analysis of the copolymers obtained by twin screw extrusion

Tensile tests were performed at room temperature according to ASTM D638V.

Blend 25 is just a mechanical blend since no catalyst or co-catalyst is added. The mechanical behaviour of this blend is very poor, as indicated by a tensile strength of 54.6 MPa and an elongation at break of 5.1% as shown in Tab. 6, because of the little compatibility of the two starting polymers. The corresponding mechanical blend extruded at 230 °C, Blend 29, shows a better mechanical behaviour, associated to an elongation at break of 95.5%. This means that a higher extrusion temperature induces some transformations leading to improved compatibility. Blend 26 where triacetin is used as catalyst shows a very ductile behaviour, with an elongation at break of 98.7%, an indication of an excellent compatibility between the two polymer phases: PC-rich and PLA-rich. Blend 27 is even more brittle than Blend 25, with an elongation at break of 2.3%, meaning that TBATPB is not active as catalyst at this temperature (210 °C), because of the limited mixing time achievable in a twin screw extruder. Blend 28, where both TBATPB and triacetin is added shows even better mechanical properties than Blend 27, with a tensile strength of 65.5 MPa (corresponding to a 20.0% increase with respect to the mechanical blend) while maintaining an excellent value of elongation at break reaching 46.5%, thus showing the synergistic action of the TBATPB-triacetin co-catalyst system. This is confirmed by comparing the stress-strain curves of the blends prepared at 230°C. As mentioned above, Blend 29, the simple mechanical mixture, shows a rather ductile behaviour, with a tensile strength of 62 MPa and an elongation at break of 96.4%, but both Blends 30 and 31 show an increased Yield Strength, 65.1 and 63.9 MPa, respectively and an elongation at break of 100.7% and 46.9%, still respectively. This indicates that both TBATPB and triacetin are active as catalysts at this temperature. The best mechanical performance is shown by Blend 32 where both catalysts are added during the extrusion, with a tensile strength of 68.6 MPa (with an increase of 12.1% respect to the mechanical mixture) while maintaining a very good elongation at break of 35.3%, thus confirming the synergistic action of the TBATPB-triacetin co-catalyst system in promoting the compatibility of the PLA-PC system by means of the formation of a copolymer.

The dynamic-mechanical analysis data, performed on rectangular samples having dimensions of 20x5x1.5 mm, were analyzed in the range of temperature -100 - 250 °C with a heating rate of 2 °C/min, frequency of 10 Hz.

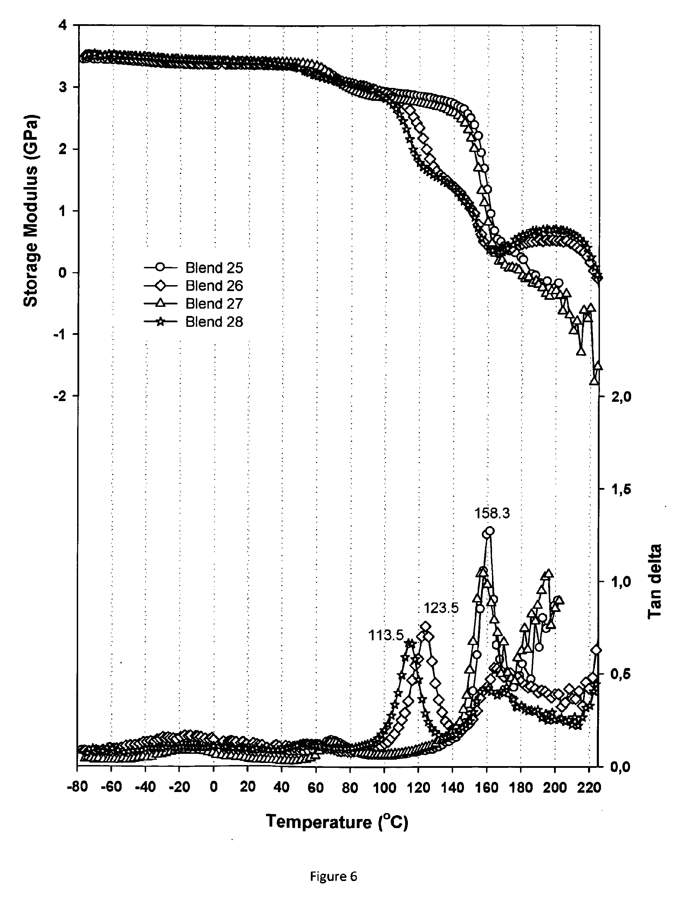

From the point of view of the dynamical mechanical properties, the traces obtained by plotting tan δ versus temperature, show a new peak which does not occur in the case of a simple physical mixture of two homopolymers. This new peak appears a temperature Tgp lower than the Tg of PC. This aspect is related to the presence of PC-blocks in the copolymer and is the indisputable proof of obtaining the products covered by this invention. For example in Figure 6, for the blends extruded at 210 °C, these new peaks appear for Blend 26 (catalyst: triacetin only) and Blend 28 (TBATPB-triacetin co-catalyst system) at 123.5 and 113.5 °C respectively , while are not present for Blend 25 (mechanical mixture) and Blend 27 (catalyst: TBATPB only).

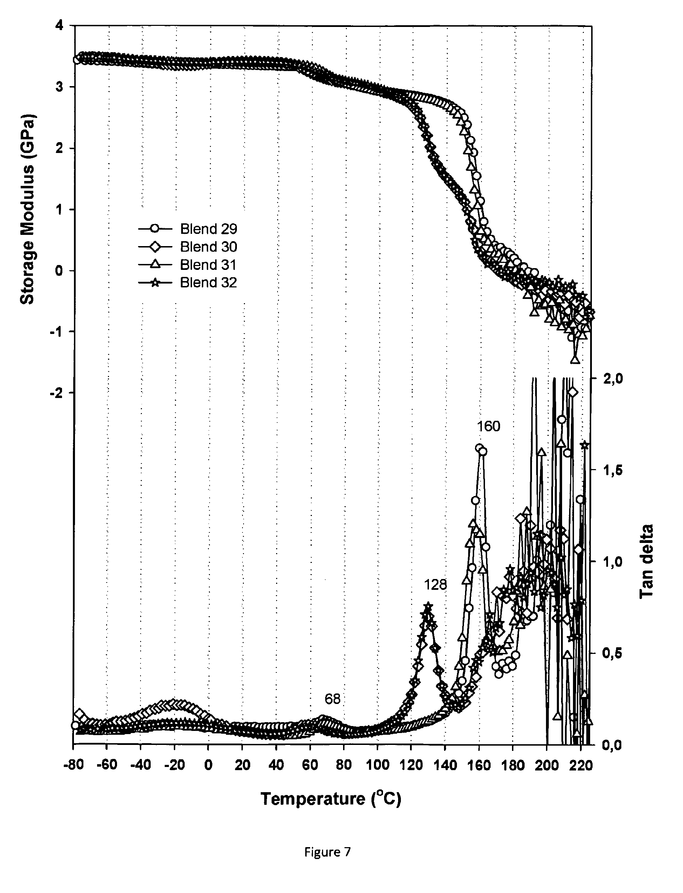

A similar analysis for the DMTA data shown in Figure 7 for the blends prepared at 230 °C can be carried out. Blend 30 (catalyst: triacetin only) and Blend 32 (TBATPB-triacetin co-catalyst system) show a new peak at 128 °C, while the mechanical blend (Blend 29) shows a peak, associated to the Tg of the PC phase, at 160 °C. Blend 31, where TBATPB is used as a catalyst, shows a peak at a slightly lower temperature, 155 °C, and this can be explained with the occurrence of the transterification reaction leading to PC blocks with length shorter than in the mechanical blend.

The analysis of the DMTA data is consistent with the fact that these materials show a polyphase structure consists of PLA domains dispersed in a matrix of PC, or vice versa, depending on the volume ratio of the components. In addition, for the PLA-rich phase, there are an amorphous phase and a crystalline phase. The Tg transition temperatures of both PLA (50-70 °C) and PC (155-160 °C) are not, in general, much different from typical values of the two polymers PLA and PC, but a new peak appears at intermediate temperatures (110-130 °C) for the copolymer.

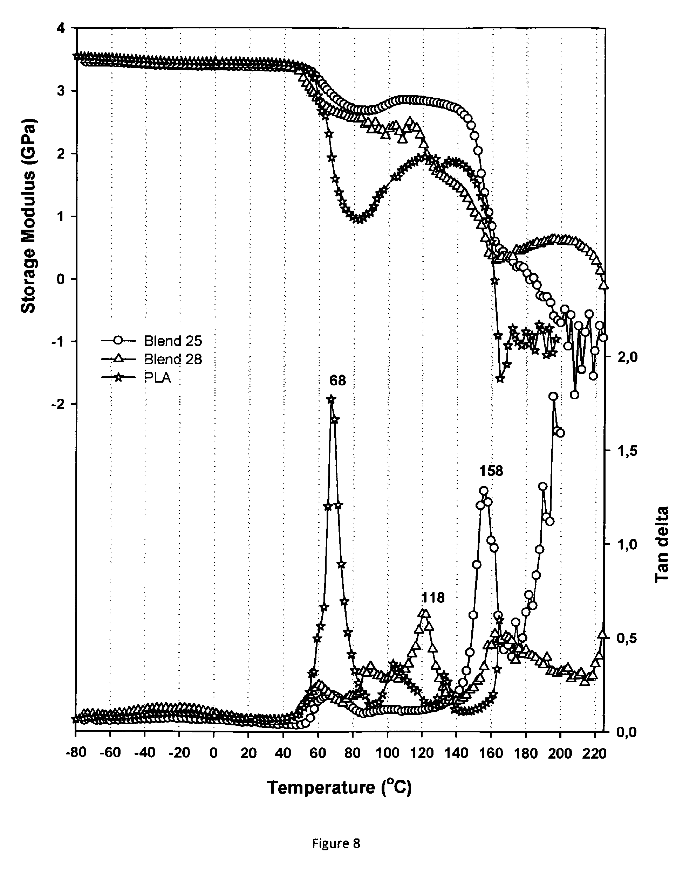

A comparison is also made in Figure 8 between not annealed samples of pure PLA, Blend 25 and Blend 28 and this shows how both blends have a much higher Young's modulus across and beyond the Tg of PLA. Also the modulus of PLA tends to increase starting from about 80 °C to 120 °C where it reaches a new maximum. This is associated to the partial crystallization of the PLA phase. A similar phenomenon is present in Blend 25, although with a much more limited entity, while is not visible for Blend 28. This can be explained by the block-copolymer nature of this material. The PLA-blocks are shorter than in pure PLA or in the mechanical mixture with PC. Moreover, they are surrounded by rigid PC blocks which strongly limit the molecular mobility and hinder the crystallization process. As a proof of this statement, we can observe an increase in modulus of Blend 28 above 160 °C, which corresponds to the Tg of the PC blocks, up to 200 °C, where the Young's modulus of the blend reaches a new maximum. This can be explained with the fact that, when the PC-blocks are beyond their Tg, the PLA blocks recover their mobility and are able to crystallize. Table 6 shows the values of Young's modulus at 60 ° C, showing that the copolymers have higher stiffness compared to the PLA, at temperatures close to Tg.

The best mechanical characteristics of the claimed products refer to maintaining a high elastic modulus, at temperatures close to or above the Tg of the PLA with similar molecular weight. This result is closely related to the presence of PC blocks with a high Tg (close to 110-120 °C). This can be achieved using PC starting with a degree of polymerization medium numeral greater than 30. The PLA must have starting values of Mn does not below 50000 Dalton.

The mixing conditions affect the structure of the copolymer in terms of number and length of blocks, and the total molecular weight of the copolymer. Specifically, the mixing time and temperature used should not lead to copolymers having average molecular weights less than 20000 Dalton numerals, to avoid a collapse in mechanical properties.

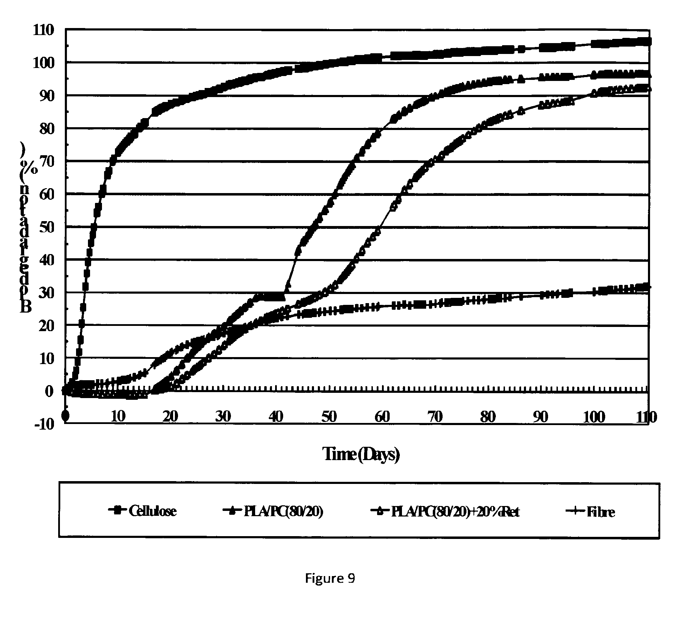

The length of the PC blocks is also very important in terms of its biodegradability. One of the most interesting characteristics of the new PLA/PC copolymers is their degradability in composting facilities. While for mechanical blends of PLA and PC only the PLA phase is biodegradable and the PC phase remains unaltered, results for PLA80/PC20 copolymer (Blend 33) and PLA80/PC20 reinforced with additional 20% wood fibres (Blend 34) show complete degradation after 110 days of controlled composting (ISO 14855). After a lag phase of 20 days (typical for PLA) the biodegradation took off to reach an absolute biodegradation at a level of 96.6% and 92.7%, respectively (Fig. 9). According to the European standard EN 13432 on compostability of packaging a material fulfils the requirement on biodegradation when the percentage of biodegradation is at least 90% in total or 90% of the maximum degradation of a suitable reference item (e.g. cellulose) after a plateau has been reached for both reference and test item within a test duration of 180 days. This can be explained with the fact that the length of PC blocks is much shorter in copolymers compared to mechanical blends and this has the consequence in an easier biodegradability of these materials.

Since pure PC is not biodegradable, copolymer blending with PLA might provide a useful method for biodegrading post-consumer recycled PC, when, after several reuses, material degradation prevents further recycling.

**Table 1 - Details of the compositions used for the blends obtained by batch mixing in the examples 1-24.**

| **Mixtures** | **PLA (wt%)** | **PC (wt%)** | **T mix °C.** | **Catalyst** |
|---|---|---|---|---|
| **PLA** | **100** | | **-** | |
| **PC** | | **100** | **-** | |
| **1** | **50** | **50** | **250** | |
| **2** | **50** | **50** | **250** | |
| **3** | **45** | **45** | **250** | **10% Blend 2** |
| **4** | **50** | **50** | **250** | **0,5% TBATPB** |
| **5** | **80** | **20** | **250** | **0,5% TBATPB** |
| **6** | **80** | **20** | **250** | |
| **7** | **100** | | **250** | **(Degraded)** |
| **8** | **100** | | **250** | |
| **9** | **40** | **60** | **250** | |
| **10** | **40** | **60** | **250** | **0,5% TBATPB** |
| **11** | **80** | **20** | **250** | **0,25% TBATPB** |
| **12** | **60** | **40** | **250** | **0,5% TBATPB** |
| **13** | **60** | **40** | **250** | |
| **14** | **70** | **30** | **250** | |
| **15** | **90** | **10** | **250** | |
| **16** | **70** | **30** | **250** | **0,5% TBATPB** |
| **17** | **90** | **10** | **250** | **0,5% TBATPB** |
| **18** | **80** | **20** | **250** | **0,15% TBATPB** |
| **21** | **80** | **20** | **210** | **-** |
| **22** | **80** | **20** | **210** | **0,5% TBATPB** |
| **23** | **80** | **20** | **210** | **0,25% TBATPB** |
| **24** | **80** | **20** | **210** | **0,15% TBATPB** |

**Table 2 - Average molecular mass used for the blends obtained by batch mixing in the examples 1-24.**

| **Mixtures** | **PLA %** | **PC%** | **T °C Mix.** | **Catalyst** | **Mn** | **Mw** | **Mw/Mn** |
|---|---|---|---|---|---|---|---|
| **PLA** | **100** | | **-** | | **162940** | **199590** | **1,2** |
| **PC** | | **100** | **-** | | **10400** | **25420** | **2,4** |
| **1** | **50** | **50** | **250** | | **51180** | **94130** | **1,8** |
| **2** | **50** | **50** | **250** | | **49210** | **87370** | **1,8** |
| **3** | **45** | **45** | **250** | **10% Blend 2** | **52150** | **91870** | **1,8** |
| **4** | **50** | **50** | **250** | **0,5% TBATPB** | **44800** | **83320** | **1,9** |
| **5** | **80** | **20** | **250** | **0,5% TBATPB** | **65240** | **113540** | **1,7** |
| **6** | **80** | **20** | **250** | | **77160** | **122100** | **1,6** |
| **7** | **100** | | **250** | **(Degraded)** | **79720** | **121460** | **1,5** |
| **8** | **100** | | **250** | | **119040** | **153990** | **1,3** |
| **9** | **40** | **60** | **250** | | **48530** | **89040** | **1,8** |
| **10** | **40** | **60** | **250** | **0,5% TBATPB** | **42610** | **75380** | **1,8** |
| **11** | **80** | **20** | **250** | **0,25% TBATPB** | **72700** | **117140** | **1,6** |
| **12** | **60** | **40** | **250** | **0,5% TBATPB** | **50040** | **89130** | **1,8** |
| **13** | **60** | **40** | **250** | | **55420** | **99880** | **1,8** |
| **14** | **70** | **30** | **250** | | **63970** | **107900** | **1,7** |
| **15** | **90** | **10** | **250** | | **88800** | **130770** | **1,5** |
| **16** | **70** | **30** | **250** | **0,5% TBATPB** | **54180** | **98250** | **1,8** |
| **17** | **90** | **10** | **250** | **0,5% TBATPB** | **73730** | **117480** | **1,6** |
| **18** | **80** | **20** | **250** | **0,15% TBATPB** | **89130** | **132040** | **1,5** |
| **21** | **80** | **20** | **210** | **-** | **41479** | **102171** | **2,5** |
| **22** | **80** | **20** | **210** | **0,5% TBATPB** | **30010** | **90452** | **3,0** |
| **23** | **80** | **20** | **210** | **0,25% TBATPB** | **23489** | **84996** | **3,6** |
| **24** | **80** | **20** | **210** | **0,15% TBATPB** | **27744** | **89150** | **3,2** |

**Table 3 - DMTA data for the blends obtained by batch mixing in the examples 1-24.**

| **Mixt.** | **PLA %** | **PC%** | **T(°C)** | **Notes or Cat.** | **Tg(I) °C** | **T(°C) Tanδ Max** | **ΔE' (Mpa)** |
|---|---|---|---|---|---|---|---|
| **PLA** | **100** | | **250** | **Starting mat.** | **59,9** | **71,5** | **2059** |
| **PLA** | **100** | | **250** | **Not pressed** | **60,5** | **-** | **-** |
| **1** | **50** | **50** | **250** | **-** | **60,0** | **71,7** | **929** |
| **2** | **50** | **50** | **250** | **-** | **59,2** | **70,1** | **1169** |
| **3** | **45** | **45** | **250** | **10% Blend 2** | **59,6** | **71,6** | **954** |
| **4** | **50** | **50** | **250** | **0,5% TBATPB** | **59,1** | **71,6** | **1189** |
| **5** | **80** | **20** | **250** | **0,5% TBATPB** | **58,7** | **71,2** | **1705** |
| **6** | **80** | **20** | **250** | **-** | **59,9** | **70,5** | **1848** |
| **8** | **100** | | **250** | **-** | **60,5** | **72,1** | **1818** |
| **9** | **40** | **60** | **250** | **-** | **57,3** | **69,6** | **918** |
| **10** | **40** | **60** | **250** | **0,5% TBATPB** | **58,4** | **70,6** | **1030** |
| **11** | **80** | **20** | **250** | **0,25% TBATPB** | **58,4** | **72,3** | **1874** |
| **12** | **60** | **40** | **250** | **0,5% TBATPB** | **58,7** | **71,7** | **1461** |
| **13** | **60** | **40** | **250** | **-** | **59,9** | **72,4** | **1324** |
| **14** | **70** | **30** | **250** | **-** | **59,5** | **72,7** | **1575** |
| **15** | **90** | **10** | **250** | **-** | **59,6** | **72,1** | **1818** |
| **16** | **70** | **30** | **250** | **0,5% TBATPB** | **59,5** | **71,7** | **1629** |
| **17** | **90** | **10** | **250** | **0,5% TBATPB** | **59,5** | **72,8** | **1468** |
| **18** | **80** | **20** | **250** | **0,15% TBATPB** | **59,5** | **71,4** | **1771** |
| **21** | **80** | **20** | **210** | **-** | **-** | **71,3** | **1906** |
| **22** | **80** | **20** | **210** | **0,5% TBATPB** | **-** | **71,6** | **1338** |
| **23** | **80** | **20** | **210** | **0,25% TBATPB** | **-** | **71,3** | **1848** |
| **24** | **80** | **20** | **210** | **0,15% TBATPB** | **-** | **70,7** | **1698** |

**Table 4 - Mechanical properties for the blends obtained by batch mixing in the examples 1-24.**

| **Mix.** | **PLA %** | **PC%** | **Notes or Cat.** | **T(°C) Mix.** | **E' (MPa)** | **σ_{R} (MPa)** | **Eb (%)** |
|---|---|---|---|---|---|---|---|
| **PLA** | 100 | 0 | Starting mat. | 250 | 3160 | 64.2 | 2.7 |
| **1** | 50 | 50 | - | 250 | 2535 | 33.5 | 1.4 |
| **2** | 50 | 50 | mixed **20 min.** | 250 | 2667 | 33.5 | 1.4 |
| **3** | 45 | 45 | 10% Blend 2 | 250 | 2766 | 31.6 | 1.4 |
| **4** | 50 | 50 | **0,5**% TBATPB | 250 | 2563 | 46.3 | 2.1 |
| **5** | 80 | 20 | **0,5**% TBATPB | 250 | 2980 | 30.6 | 1.1 |
| **6** | 80 | 20 | - | 250 | 3033 | 39.5 | 1.4 |
| **8** | 100 | 0 | - | 250 | 3177 | 33.3 | 1.1 |
| **9** | 40 | 60 | - | 250 | 2442 | 24.3 | 1.0 |
| **10** | 40 | 60 | **0,5**% TBATPB | 250 | 2452 | 28.0 | 1.3 |
| **11** | 80 | 20 | **0,25**% TBATPB | 250 | 3002 | 29.0 | 1.0 |
| **12** | 60 | 40 | **0,5**% TBATPB | 250 | 2775 | 31.5 | 1.3 |
| **13** | 60 | 40 | - | 250 | 2571 | 38.9 | 1.7 |
| **14** | 70 | 30 | - | 250 | 2776 | 42.7 | 1.7 |
| **15** | 90 | 10 | - | 250 | 2980 | 43.3 | 1.7 |
| **16** | 70 | 30 | **0,5**% TBATPB | 250 | 2605 | 39.9 | 1.7 |
| **17** | 90 | 10 | **0,5**% TBATPB | 250 | 2837 | 44.2 | 1.7 |
| **18** | 80 | 20 | **0,15**% TBATPB | 250 | 2984 | 43.9 | 1.6 |
| **21** | 80 | 20 | - | 210 | 2842 | 64.3 | 2.9 |
| **22** | 80 | 20 | **0,5**% TBATPB | 210 | 2997 | 66.3 | 2.9 |
| **23** | 80 | 20 | **0,25**% TBATPB | 210 | 2972 | 62.1 | 2.5 |
| **24** | 80 | 20 | **0,15**% TBATPB | 210 | 2793 | 60.7 | 2.7 |

**Table 5 - Details of the compositions used for the blends obtained by twin screw extrusion in the examples 25-32.**

| Blends | PLA (wt%) | PC (wt%) | TBA-TBP (wt%) | Triacetin (wt%) | Extrusion temperature (PC) |
|---|---|---|---|---|---|
| Blend 25 | 40 | 60 | | | 210 |
| Blend 26 | 40 | 60 | | 5 | 210 |
| Blend 27 | 40 | 60 | 0.2 | | 210 |
| Blend 28 | 40 | 60 | 0.2 | 5 | 210 |
| Blend 29 | 40 | 60 | | | 230 |
| Blend 30 | 40 | 60 | | 5 | 230 |
| Blend 31 | 40 | 60 | 0.2 | | 230 |
| Blend 32 | 40 | 60 | 0.2 | 5 | 230 |

**Table 6 - Mechanical properties of the blends obtained by twin screw extrusion in the examples 25-32.**

| Blends | Tensile strength (MPa) | Young's modulus (GPa) | Elongation at break (%) |
|---|---|---|---|
| Blend 25 | 54.6 | 2.97 | 5.1 |
| Blend 26 | 63.1 | 3.21 | 98.7 |
| Blend 27 | 50.7 | 3.07 | 2.3 |
| Blend 28 | 65.5 | 3.14 | 46.5 |
| Blend 29 | 62 | 3.03 | 96.4 |
| Blend 30 | 65.1 | 3.25 | 100.7 |
| Blend 31 | 63.9 | 3.14 | 46.9 |
| Blend 32 | 68.6 | 3.2 | 35.3 |

**Table 7- Details of the compositions used for the blends obtained by twin screw extrusion in the examples 33-34.**

| Blends | PLA (wt%) | PC (wt%) | TBATPB (phr) | Wood fibres (wt%) | Extrusion temperature (°C) |
|---|---|---|---|---|---|
| Blend 33 | 80 | 20 | 0.125 | - | 230 |
| Blend 34 | 48 | 12 | 0.125 | 40 | 230 |

### PATENT LITERATURE

1. US 7445835 B2 (2008)
2. WO 2008143322 A1 (2008)
3. US 0276582 A1 (2006)
4. US 20080051508 A1 (2008).
5. JP 2005048067 (2005).
6. JP 2007231149 A (2007).
7. JP2007056247 (2007).
8. JP2006111858 (2006).
9. JP2006199743 (2006).
10. JP2006028299 (2006).
11. EP 1792941.
12. US 2010/0081739 A1 (2010).

## Claims

1. A process for preparing copolymers comprising mixing in the molten state a component of polylactic acid of length *n* and a component of aromatic polycarbonate of length m, according to the following reaction
(PLA)*n* + (PC)*m* → [(PLA)x - (PC)y]z
wherein 100 < *n* < 5000, 20 < *m* < 300, x < *n,* y < *m* and Z is greater than or equal to 1 for a time range between 0.5 and 20 minutes, preferably between 1 and 2 minutes, at a temperature of at least 180° C in the presence of a catalytic system comprising tetrabutylammonium tetraphenylborate (TBATPB) and glycerin triacetate (TA).

2. The process according to claim 1, wherein said catalytic system comprises tetrabutylammonium tetraphenylborate (TBATPB) in a concentration of between 0.10 to 0.5% by weight and triacetin in a concentration of between 0.3 to 20% by weight the percentage of each catalyst being referred to the total weight of the copolymers.

3. The process according to one of claims 1 or 2, wherein said mixing occurs in a twin screw extruder at a temperature between 180 and 230 °C.

4. The process according to one of claims 1 to 3, wherein said aromatic polycarbonate component is bisphenol A polycarbonate.

5. The process according to one of claims 1 to 4, wherein during said mixing a flame retardant and, or a fluorine-based resin and, or one or more additives selected from the class formed by lubricants, mold-release agents, nucleating agents, stabilizers, fillers, reinforcing agents, antistatic agents, dyestuffs and pigments are added.

## Patentansprüche

1. Verfahren zur Herstellung von Copolymeren, umfassend das Mischen eines Bestandteils von Polymilchsäure der Länge *n* und eines Bestandteils eines aromatischen Polycarbonats der Länge m im geschmolzenen Zustand, gemäß der folgenden Reaktion
(PLA)*ₙ* + (PC)*ₘ* → [(PLA)ₓ - (PC)_{y}]_{z}
wobei 100 < *n* < 5000, 20 < *m* < 300, x < *n*, y < *m* und z größer oder gleich 1 ist, für einen Zeitraum zwischen 0,5 und 20 Minuten, bevorzugt zwischen 1 und 2 Minuten, bei einer Temperatur von mindestens 180 °C in Gegenwart eines Katalysatorsystems enthaltend Tetrabutylammonium-tetraphenylborat (TBATPB) und Glyzerintriacetat (TA).

2. Verfahren gemäß Anspruch 1, wobei besagtes Katalysatorsystem Tetrabutylammonium-tetraphenylborat (TBATPB) in einer Konzentration zwischen 0,10 bis 0,5 Gew.-% und Triacetin in einer Konzentration zwischen 0,3 bis 20 Gew.-% enthält, wobei sich der Prozentsatz jedes Katalysators auf das Gesamtgewicht des Copolymers bezieht.

3. Verfahren gemäß einem der Ansprüche 1 oder 2, wobei besagtes Mischen in einem Doppelschneckenextruder bei einer Temperatur zwischen 180 und 230 °C stattfindet.

4. Verfahren gemäß einem der Ansprüche 1 bis 3, wobei die besagte aromatische Polycarbonatkomponente Bisphenol-A-Polycarbonat ist.

5. Verfahren gemäß einem der Ansprüche 1 bis 4, wobei während besagtem Mischen ein Flammschutzmittel und, oder ein Fluor-basiertes Harz und, oder ein oder mehrere Additiv(e) ausgewählt aus der Klasse bestehend aus Gleitmittel, Formentrennmittel, Keimbildner, Stabilisatoren, Füllstoffe, Verstärkungsmittel, antistatische Mittel, Farbstoffe und Pigmente zugegeben werden.

## Revendications

1. Procédé de préparation de copolymères comprenant le mélange à l'état fondu d'un composant d'acide polylactique de longueur *n* et d'un composant de polycarbonate aromatique de longueur m, selon la réaction suivante
(PLA)*ₙ* + (PC)*ₘ* → [(PLA)ₓ - (PC)_{y}]_{z}
dans laquelle 100 < *n* < 5000, 20 < *m* < 300, x < *n,* y < *m* et Z est supérieur ou égal à 1 pendant une durée située entre 0,5 et 20 minutes, de préférence entre 1 et 2 minutes, à une température d'au moins 180°C en présence d'un système catalytique comprenant du tétraphénylborate de tétrabutylammonium (TBATPB) et du triacétate de glycérine (TA).

2. Procédé selon la revendication 1, dans lequel ledit système catalytique comprend du tétraphénylborate de tétrabutylammonium (TBATPB) en une concentration située entre 0,10 à 0,5 % en poids et de la triacétine en une concentration située entre 0,3 et 20 % en poids, le pourcentage de chaque catalyseur étant indiqué par rapport au poids total des copolymères.

3. Procédé selon l'une quelconque des revendications 1 ou 2, dans lequel ledit mélange se produit dans une extrudeuse bi-vis à une température située entre 180 et 230°C.

4. Procédé selon l'une quelconque des revendications 1 à 3, dans lequel ledit composant de polycarbonate aromatique est le polycarbonate de bisphénol A.

5. Procédé selon l'une quelconque des revendications 1 à 4, dans lequel, au cours dudit mélange, un retardateur de flamme et, ou une résine à base de fluor et, ou un ou plusieurs additifs choisis dans la catégorie formée par les lubrifiants, les agents de démoulage, les agents de nucléation, les stabilisants, les charges, les agents de renforcement, les agents antistatiques, les colorants et pigments, sont ajoutés.
